# EUROPEAN PATENT SPECIFICATION

(11) **EP 0 602 080 B1**
(45) Date of publication and mention of the grant of the patent: **21.04.1999**
(21) Application number: 92917775.6
(22) Date of filing: 03.08.1992
(51) Int. Cl.: B29C 44/00, B32B 3/26

(54) **INSULATIVE PLASTIC COMPOSITE STRUCTURE**
ISOLIERENDE PLASTIKVERBUNDSTRUKTUR
STRUCTURE COMPOSITE ISOLANTE FORMEE DE MATERIAUX PLASTIQUES

(30) Priority: 06.09.1991 US 756029
(43) Date of publication of application: 22.06.1994
(73) Proprietor: THE DOW CHEMICAL COMPANY, Midland, Michigan 48674 (US)
(72) Inventor: PAQUET, Andrew, Norman, Granville, OH 43023 (US); SUH, Kyung, Won, Granville, OH 43023 (US); GRIFFIN, Warren, Herbert, Granville, OH 43023 (US)
(74) Representative: Casalonga, Axel
(86) International application number: US9206528
(87) International publication number: WO9304847

(56) References cited:
- GB-A- 2 247 640
- US-A- 3 557 265
- US-A- 3 645 837
- US-A- 4 048 101
- US-A- 4 302 410
- US-A- 4 397 797
- US-A- 4 469 741
- US-A- 4 579 774
- US-A- 4 582 221
- US-A- 4 801 484
- US-A- 4 889 669
- US-A- 4 892 779
- US-A- 4 927 675
- US-A- 5 071 886
- DATABASE WPI Week 8939, Derwent Publications Ltd., London, GB; AN 89-283461 & JP-A-1 209 134 (FUJI PHOTO FILM KK) 22 August 1989

## Description

The invention relates to a plastic foam composite structure having enhanced insulative performance and to a process for making such structure.

Many methods of enhancing the insulating performance of plastic foams have been taught in the literature. These methods include, among others, use of an insulating gaseous blowing agent, reduction in foam cell size, and incorporation of various additives, including carbon black, to enhance the infrared absorption or reflectance of the foam.

One method of enhancing insulative performance of a foam, incorporation of carbon black into the foam matrix, is desirable because of the degree of increase in performance and the relatively low cost of the carbon black additive. The problem however, in incorporating carbon black into plastic foam is one of processing. Mixing and pressure parameters for plastic flow melt containing carbon black are more extreme than without, and the amount of process wastes from purge cycles is relatively higher. Thus, it would be desirable to have an insulative plastic foam utilizing carbon black yet not presenting unusual or undesirable processing problems.

US-A-4 889 669 discloses a process for making a coextruded composite structure, comprising :
- providing a first plastic melt stream having incorporated therein a blowing agent under an elevated pressure sufficient to prevent expansion of the first stream and being free of carbon black;
- providing a second plastic melt stream having incorporated therein an amount of carbon black sufficient to reduce the thermal conductivity of the composite structure relative to a corresponding composite structure free of carbon black;
- Splitting the second melt stream into two substreams; and
- integrating the first stream between the two second substreams to form a composite melt stream;
- extruding the composite stream through a die to a zone of lower pressure to form the composite structure comprising a first layer of a plastic foam and a second layer of a plastic material.

According to the present invention, there is a process for making a coextruded insulative composite structure, comprising :
providing a first plastic melt stream having incorporated therein a blowing agent under an elevated pressure sufficient to prevent expansion of the first stream and being free of carbon black;
providing a second plastic melt stream having incorporated therein an amount of carbon black sufficient to reduce the thermal conductivity of the composite structure relative to a corresponding composite structure free of carbon black;
splitting the first melt stream and the second melt stream into a plurality of first melt substreams and second melt substreams; integrating the first and second melt substreams in an alternating sequence to form a composite melt stream; and
extruding the composite stream through a die to a zone of lower pressure to form the composite structure comprising a plurality of alternating first and second layers, the first layers being of a plastic foam and the second layers of a plastic material.

According to the invention there is further a coextruded insulative composite structure obtainable by the aforementioned process of the invention.

Incorporation of carbon black into the second melt stream imparts enhanced insulativeness to the composite structure while allowing the first plastic foam layers to be free or substantially free of carbon black. The first and second layers are adjacent and cohesive with respect to each other. The second layers are preferably substantially noncellular or unfoamed, and most preferably take the form of a film. The composite structure is comprised of a plurality of substantially alternating first and second layers.

The second layers contain an amount of carbon black sufficient to enhance the insulativeness of and reduce the thermal conductivity of the composite structure. Incorporation of carbon black in the second melt stream instead of throughout the entire composite structure allows for significantly reducing or eliminating processing difficulties associated with thermoplastic flow melts containing carbon black. Incorporation of carbon black into a film layer rather than a foam layer is advantageous because film-forming plastic melts typically require less processing than foam-forming plastic melts because they do not contain a blowing agent and are typically extruded closer to the die. Even if both the first and second layers are comprised of foam, processing problems are reduced because the first layers do not contain carbon black.

The total number of first and second layers is preferably up to 1000, and most preferably up to 20. The first and second layers are generally parallel and in stacked relationship with one another. The first and second layers preferably alternate consecutively along the stack of layers, but first layers may abut each other or second layers may abut each other occasionally through the stack. Preferably, the outer layers (the top and bottom of the stack) of the composite structure are second layers having carbon black incorporated therein to further enhance the insulativeness of and reduce the thermal conductivity of the present structure. Though the rectangular configuration will be the most typical shape of the present structure in both cross-section and on its surfaces, it is understood that structure of any shape such as cylindrical or circular may be produced.

The first and second layers typically are heat fused to each other, but also may be adhered to each other by intermediary layers made of tacky plastics such as ethylene-vinyl acetate copolymers, ethylene-acrylic acid copolymers, ethylene-propylene copolymers, urethanes, and the like. Preferably, the first and second layers will be heat fused to each other as contemplated in coextruded structures. When the first and second layers are referred to as being adjacent and cohesive with respect to each other, this is inclusive of the layers being fused together or being adhered by tacky intermediate layers.

The second layers preferably take the form of a substantially noncellular or unfoamed film. The thickness of the film layers is not critical, but is preferably from 1 micron to 2 millimeters and more preferably from 3 microns to 1 millimeter. It is understood that the film layers may also take the form of thin sheets. Alternately, the second layers may take the form of a foam to reduce the density of such layers.

The second layers preferably contain an amount of a plasticizing additive plasticizer and/or anti-static additive plasticizer sufficient to ensure generally uniform dispersion of the carbon black within the second layers. The plasticizer is a plasticizing substance different than the plastic material primarily comprising the second layers. The plasticizer is preferably present at from 0.01 to 1.0 and more preferably present at from 0.05 to 0.2 weight percent based upon the weight of the second layers. Any known plasticizer may be used; useful plasticizers include ethyl chloride, dibutyl phthalate, dioctyl phthalate and polyethylene glycol. Certain plasticizers, such as ethyl chloride, can act as blowing agents under certain conditions. If it is desired that the second layers be substantially unfoamed and be loaded with a plasticizer which could also function as a blowing agent, then the plastic material comprising same must be melt processed and extruded in a manner preventing foaming or the concentration of plasticizer must be limited to prevent foaming.

The first and second layers may be comprised of the same or different plastic material. Both thermoplastic and thermoset materials are suitable. Suitable plastic materials may be selected from any of those which can be formed into film or blown into foam. Suitable plastics include polyolefins, polyvinylchloride, styrenic polymers, cellulosic polymers, polycarbonates, polyetherimides, polyamides, polyesters, polyvinylidene chloride, polymethylmethacrylate, polyurethanes, polyisocyanurates, phenolics, copolymers, terpolymers, polymer blends, rubber modified polymers, and the like. Suitable polyolefins include polyethylene, polypropylene and polybutylene. Suitable styrenics may include polystyrene and copolymers of styrene and other monomers, such as acrylic acid. The present invention is particularly useful with composite structures comprised of polystyrene, which may be formed into both a film and a foam, because polystyrene foams are commonly employed as an insulating plastic foam.

The carbon black preferably comprises between 1.0 and 25 weight percent based upon the weight of the plastic material in the composite structure. The carbon black preferably has an average particle size between 10 and 100 nanometers. The carbon black preferably has an average surface area between 10 and 1500 square meters per gram of carbon.

The present structure may contain additional additives such as pigments, fillers, antioxidants, extrusion aids, nucleating agents, stabilizing agents, antistatic agents, fire retardants, acid scavengers, or the like.

The foam component of the present foam structure is closed-cell. Preferably, the present foam is greater than 90 percent closed-cell according to ASTM D2856-A.

The foam component of the present composite structure preferably has density of 16 to 80 kilograms per cubic meter. The foam component further preferably has an average cell size of 0.05 to 2.4 mm.

The first plastic melt stream is generally formed by melting a plastic material and incorporating therein a blowing agent. The blowing agent may be incorporated or blended into the plastic melt by any means known in the art such as with an extruder, mixer, blender, or the like. Prior to blending with the blowing agent, the plastic material is heated to a temperature at or above the glass transition temperature and preferably above the melting point of the plastic material. The blowing agent is blended with the plastic melt at an elevated pressure sufficient to prevent substantial expansion of the melt or loss of generally homogenous dispersion of the blowing agent within the melt. Such a pressure is typically at least above 345 kilopascals gauge and more preferably above 6900 kilopascals gauge. The blowing agent is incorporated into the first plastic melt stream in a weight proportion of between 1 to 30 parts and preferably from 3 to 15 parts per hundred parts of the plastic material to be expanded.

Blowing agents which optionally may be incorporated in the first plastic melt to make the first layer or layers of the present composite structure are described below. If it is desired that the second layer or layers of the present structure be cellular or foamed, the following blowing agents may likewise be incorporated into the second plastic melt. Useful blowing agents include gaseous materials, volatile liquids, and chemical agents which decompose into a gas or other byproducts. Suitable blowing agents include, but are not limited to nitrogen, carbon dioxide, air, argon, water, alkanes of 2 to 9 carbon atoms such as n-pentane and isobutane, methyl chloride, ethyl chloride, butane, pentane, isopentane, perfluoromethane, chlorotrifluoromethane, dichlorodifluoromethane, tri-chlorofluoromethane, perfluoroethane, 1-chloro-1,1-difluoroethane, 1,1-difluoroethane, 1,1,1,2-tetrafluoroethane, 1,1,1-trifluoroethane, chlorotetrafluoroethane, 2-chloro-1,1,1,2-tetrafluoroethane, chloropentafluoroethane, dichlorotetrafluoroethane, trichlorotrifluoroethane, perfluoropropane, chloroheptafluoropropane, dichloropropane, dichlorohexafluoropropane, perfluorobutane, chlorononafluorobutane, perfluorocyclobutane, azodicarbonamide, azodiisobutyronitrile, benzenesulfonhydrazide, 4,4-oxybenzene sulfonyl-semicarbazide, p-toluene sulfonyl semicarbazide, barium azodicarboxylate, N,N'-dimethyl-N,N'-dinitrosoterephthalamide, trihydrazino triazine, and mixtures thereof. The blowing agent may comprise a mixture of two or more blowing agents.

The formation of a second plastic melt stream suitable for extrusion into a film is carried out by melting a plastic material in the manner described above for the first stream and incorporating therein carbon black. The carbon black may be dry mixed with the plastic and subsequently melting and blended together, or may be mixed with the plastic melt. The plastic and the carbon black may be blended by any means known in the art such as with an extruder, mixer, blender, or the like.

Following the incorporation of the blowing agent into the first melt stream and the carbon black into the second melt stream, the two streams are integrated to form a composite stream. The composite stream is then extruded through a die to a zone of lower pressure to form the stable composite structure of the present invention. The zone of lower pressure downstream of the die is a zone wherein the pressure is lower than that to which the first stream or the second stream if it contains a blowing agent were exposed to prevent such stream from expanding or losing their blowing agents. The stable composite structure is comprised of foamed plastic first layers and plastic foamed or unfoamed (film) second layers fused together or otherwise adhered together.

The first and second streams are integrated together and extruded by means of coextrusion or simultaneous extrusion well-known in the art. Methods and apparatuses for coextrusion are disclosed in U.S. Patents 3,565,985, 3,557,265, and 3,884,606. Such methods and apparatuses may be used to create composite structures of up to several hundred layers. During coextrusion, the first and second melt streams are both divided or split into a plurality of first and second melt substreams The plurality of substreams is then arranged and integrated to form a composite flow melt of a stack of alternating first and second substream layers. The composite flow melt is then extruded through a die to a region of lower pressure to form a composite structure of first sublayers of a foam of a plastic material and second sublayers of a plastic material wherein the sublayers are fused or otherwise adhered together. The second sublayers may or may not be foamed depending upon the presence of a blowing agent in the second melt substreams. For purposes of convenience, the first and second substream layers are referred to herein as first and second stream layers, and the first and second sublayers are referred to herein as first and second layers. Preferred methods and apparatuses for making the present composite structures are seen in U.S. Serial No. 577,723 filed September 5, 1990.

There is a method for insulating a surface comprising affixing to the surface an insulating panel fashioned from the present composite structure. Such insulating panel is useful in known applications in buildings, furnace linings, packaging, cushioning, and the like.

The following examples are presented to illustrate the invention, and are not to be construed as limiting.

Film/foam composite structures of the present invention were prepared and tested for thermal conductivity. The structures had 7 or 12 percent by weight loadings of carbon black in the film layers based upon the weight of the plastic material in the entire structure, The loadings in the film layers was 12 weight percent and more. The outer layers of each of the structures was a film layer. For structures having 3 film layers, one film layer is sandwiched between 2 foam layers, which are in turn sandwiched by outer film layers. The configuration and loading of each structure is seen in Tables 1-3.

A control structure (sample 3089-09-22) was prepared as for the examples above except that no carbon black was loaded into the structure.

Process conditions for making the present structure and the control structure are seen in Table 4. The indicated solids for the film and foam layer preparation were mixed together in separate 1 ½ inch (3.8 cm) extruders. The blowing agent was added to the foamable melt in a mixer downstream of the foam extruder and before the film extruder. Both film-forming and foamable flow melts were passed through a cooler, and then passed through the feedblock to form the coextruded composite structure.

As seen in Table 2, the structures of the present invention exhibited lower measured and corrected thermal conductivity than the control structure. The corrected thermal conductivity value was obtained by mathematically compensating for the variation in cell size, Thermal conductivity was assumed to be 0.008 Btu in/(hr. ft² F°) (1.15 x 10³ W/(m.K°)) lower for every 0.1 millimeter (mm) smaller in cell size, and 0.35 mm was used as a reference size.

**Table 1**

| Properties of Film/Foam Structures | | | | | |
|---|---|---|---|---|---|
| Sample I.D. | Density (kg/m³) | Cell Size (mm) | Structure Thickness (cm) | Film Thickness (mils) | Number of Film Layers |
| 3089-09-22* | 42.4 | 0.85 | 1.01 | 7.7 | 3 |
| 3239-37-39 | 45.6 | 0.73 | 1.15 | 4.6 | 3 |

| | | | | | |
|---|---|---|---|---|---|
| *not an example of the present invention | | | | | |

**Table 2**

| Thermal Conductivities of Film/Foam Structures | | |
|---|---|---|
| Sample I.D. | K Measured (W/m-K°) | K Corrected (W/m-K°) |
| 3089-09-22* | 0.0349 | 0.0311 |
| 3239-37-39 | 0.0317 | 0.0293 |

| | | |
|---|---|---|
| *not an example of the present invention | | |

**Table 3**

| Carbon Black Concentrations of Film/Foam Structures | | | |
|---|---|---|---|
| Sample I.D. | Carbon Black Concentration, weight percent | | |
| | Film Layer | Foam Layer | Structure |
| 3089-09-22* | 0 | 0 | 0 |
| 3239-37-39 | 24 | 0 | 7 |

| | | | |
|---|---|---|---|
| *not an example of the present invention | | | |

**Table 4**

| Run Conditions/Formulations for Coextruded Film/Foam Composites | | |
|---|---|---|
| | 3089-9-22 | 3239-37-39 |
| Foam Layers | | |
| Solids | | |
| polystyrene | 100 | 100 |
| talc (pph) | 0.02 | 0.025 |
| HBCD (pph) | 0 | 1.2 |
| MgO (pph) | 0 | 0.1 |
| CaSt.(pph) | 0 | 0.01 |
| Rate (Kg/hr) | 6.8 | 4.5 |

| Blowing Agent | | |
|---|---|---|
| HCFC-142b (pph) | 7 | 8 |
| EtCl (pph) | 3.5 | 4 |
| CO₂ (pph) | 0 | 0.07 |

| Temperature (°C) | | |
|---|---|---|
| Into Feedblock | 124 | 116 |

| Pressure (kPa) | | |
|---|---|---|
| Into Mixer | 16,000 | 16,000 |

| Film Layers | | |
|---|---|---|
| Solids | | |
| polystyrene | 100 | 76 |
| blue pigment(pph) | 0.5 | 0 |
| carbon black | 0 | 24 |
| HBCD (pph) | 0 | 1.2 |
| MgO (pph) | 0 | 0.1 |
| CaSt (pph) | 0 | 0.1 |
| Talc (pph) | 0 | 0.2 |
| Rate (kg/hr) | 1.8 | 1.8 |

| Processing Aid | | |
|---|---|---|
| EtCl (pph) | 4 | 4 |

| Temperature (°C) | | |
|---|---|---|
| Into Feedblock | 139 | 145 |

| Pressure (kPa) | | |
|---|---|---|
| Into Temp. | | |
| Control Zone | 21,370 | 21,030 |
| NOTE: pph (parts per hundred) by weight based upon polystyrene and carbon black (where present) and based upon total solids weight in instance of blowing agent;CaSt - calcium stearate; MgO - magnesium oxide; EtCl - ethyl chloride; HBCD - hexabromocyclododecane; CO₂ - carbon dioxide; HCFC - 142b - 1-chloro-1,1 difluoroethane | | |

While embodiments of the composite structure of the present invention have been shown with regard to specific details, it will be appreciated that depending upon the manufacturing process and the manufacturer's desires, the present invention may be modified by various changes without departing from the scope of the invention as defined in the appended claims.

## Claims

1. A process for making a coextruded insulative composite structure, comprising :
providing a first plastic melt stream having incorporated therein a blowing agent under an elevated pressure sufficient to prevent expansion of the first stream and being free of carbon black;
providing a second plastic melt stream having incorporated therein an amount of carbon black sufficient to reduce the thermal conductivity of the composite structure relative to a corresponding composite structure free of carbon black;
splitting the first melt stream and the second melt stream into a plurality of first melt substreams and second melt substreams;
integrating the first and second melt substreams in an alternating sequence to form a composite melt stream; and
extruding the composite stream through a die to a zone of lower pressure to form the composite structure comprising a plurality of alternating first and second layers, the first layers being of a plastic foam and the second layers of a plastic material.

2. The process of Claim 1, wherein the composite structure has between 1.0 and 25 weight percent carbon black based upon the weight of the plastic material in the composite structure.

3. The process of Claims 1 or 2, wherein the plastic material is a styrenic polymer.

4. The process of Claims 1, 2 or 3, wherein the second plastic melt stream is further provided with a plasticizing additive therein.

5. The process of Claims 1, 2, 3 or 4, wherein the second plastic flow melt stream is further provided free of the same or a different blowing agent.

6. The process of Claim 1, wherein the first stream is provided, integrated, and extruded under conditions sufficient to result in formation of first layers of a closed-cell plastic foam.

7. A coextruded insulative composite structure obtainable by the process of any of Claims 1 to 6.

8. The structure of Claim 7 wherein the carbon black comprises between about 1.0 and about 25 weight percent based upon the weight of the plastic material in the composite structure.

9. The structure of Claim 7 or 8 wherein the carbon black has an average particle size of about 10 to about 100 nanometers.

10. The structure according to any one of Claims 7-9 wherein the carbon black has an average surface area of about 10 to about 1500 square meters per gram of carbon black.

11. The structure according to any one of Claims 7-10 wherein the plastic material is polystyrene.

12. The structure according to any one of Claims 7-11 wherein the outer layers of the structure are second layers.

## Patentansprüche

1. Verfahren zur Herstellung einer koextrudierten isolierenden Verbundstruktur, umfassend:
Bereitstellen einer ersten Kunststoff-Schmelzenströmung, welche hierin eingegeben ein Blähmittel unter ausreichendem Druck zur Verhinderung der Expansion der ersten Strömung aufweist und frei von Ruß ist;
Bereitstellen einer zweiten Kunststoff-Schmelzenströmung, welche hierin eingegeben eine ausreichende Menge von Ruß zur Reduzierung der Wärmeleitfähigkeit der Verbundstruktur relativ zu einer entsprechenden, von Ruß freien Verbundstruktur aufweist;
Aufspalten der ersten Schmelzenströmung und der zweiten Schmelzenströmung in eine Mehrzahl von ersten Schmelzen-Subströmungen und zweiten Schmelzen-Subströmungen;
Integrieren der ersten und zweiten Schmelzen-Subströmungen in eine alternierende Folge zur Bildung einer Schmelzen-Verbundströmung; und
Extrudieren der Verbundströmung durch eine Düse zu einer Zone von niedrigerem Druck zur Bildung der Verbundstruktur, welche eine Mehrzahl von alternierenden ersten und zweiten Schichten umfaßt, wobei die ersten Schichten aus einem Kunststoffschaum und die zweiten Schichten aus einem Kunststoffmaterial bestehen.

2. Verfahren nach Anspruch 1, worin die Verbundstruktur zwischen 1,0 und 25 Gew.-% Ruß, bezogen auf das Gewicht des Kunststoffmaterials in der Verbundstruktur, aufweist.

3. Verfahren nach Anspruch 1 oder 2, worin das Kunststoffmaterial ein styrolartiges Polymeres ist.

4. Verfahren nach Anspruch 1, 2 oder 3, worin die zweite Kunststoff-Schmelzenströmung weiter mit einem weichmachenden Zusatz hierin bereitgestellt wird.

5. Verfahren nach den Ansprüchen 1, 2, 3 oder 4, worin die zweite Kunststofffluß-Schmelzenströmöng weiterhin frei von demselben oder einem unterschiedlichen Blähmittel bereitgestellt wird.

6. Verfahren nach Anspruch 1, worin die erste Strömung unter ausreichenden Bedingungen bereitgestellt, integriert und extrudiert wird, um die Bildung von ersten Schichten eines geschlossenzelligen Kunststoffschaums zu ergeben.

7. Koextrudierte isolierende Verbundstruktur, erhältlich nach dem Verfahren eines der Ansprüche 1 bis 6.

8. Struktur nach Anspruch 7, worin der Ruß zwischen etwa 1,0 und etwa 25 Gew.-%, bezogen auf das Gewicht des Kunststoffmaterials in der Verbundstruktur, ausmacht.

9. Struktur nach Anspruch 7 oder 8, worin der Ruß eine Durchschnittsteilchengröße von etwa 10 bis etwa 100 Nanometer hat.

10. Struktur nach einem der Ansprüche 7 - 9, worin der Ruß eine Durchschnittsoberfläche von etwa 10 bis etwa 1.500 Quadratmeter pro Gramm Ruß besitzt.

11. Struktur nach einem der Ansprüche 7 - 10, worin das Kunststoffmaterial Polystyrol ist.

12. Struktur nach einem der Ansprüche 7 - 11, worin die äußeren Schichten der Struktur zweite Schichten sind.

## Revendications

1. Procédé de fabrication d'une structure composite coextrudée isolante, comprenant les étapes consistant
- à faire arriver un premier flux d'une matière plastique en fusion contenant un agent d'expansion sous une pression suffisamment élevée pour prévenir l'expansion du premier flux et qui est exempt de noir de carbone,
- à faire arriver un second flux d'une matière plastique en fusion contenant une quantité de noir de carbone suffisante pour réduire la conductivité thermique de la structure composite par rapport à une structure composite équivalente exempte de noir de carbone ;
- à diviser le premier flux de matière en fusion et le second flux de matière en fusion en une multitude de premiers flux secondaires et de seconds flux secondaires ;
- à réunir les premiers et seconds flux secondaires en alternance de manière à former un flux composite de matière en fusion ;
- à extruder le flux composite à travers une filière vers une zone où règne une pression plus faible de manière à former une structure composite comprenant une multitude de premières et secondes couches en superposition alternée, les premières couches étant en matières plastiques expansées et les secondes couches en matière plastique.

2. Procédé selon la revendication 1, dans lequel la structure composite contient entre 1,0 et 25 % en poids de noir de carbone rapporté au poids total des matières plastiques dans la structure composite.

3. Procédé selon la revendication 1 ou 2, dans lequel la matière plastique est un polymère styrénique.

4. Procédé selon l'une quelconque des revendications 1, 2 ou 3 dans lequel le second flux de matière plastique en fusion contient en outre un agent plastifiant.

5. Procédé selon l'une quelconque des revendications 1, 2, 3 ou 4, dans lequel le second flux de matière plastique en fusion est en outre exempt du même agent d'expansion ou d'un autre agent d'expansion.

6. Procédé selon la revendication 1, dans lequel l'arrivée, l'intégration et l'extrusion du premier flux se font dans des conditions suffisantes pour permettre la formation de premières couches constituées de mousses plastiques à alvéoles fermées.

7. Structure composite coextrudée isolante que l'on peut obtenir selon le procédé de l'une quelconque des revendications 1 à 6.

8. Structure selon la revendication 7, dans laquelle le noir de carbone représente entre environ 1,0 et environ 25 % en poids rapporté au poids des matières plastiques de la structure composite.

9. Structure selon la revendication 7 ou 8, dans laquelle les particules de noir de carbone ont une taille moyenne d'environ 10 à environ 100 nanomètres.

10. Structure selon l'une quelconque des revendications 7 à 9 dans laquelle le noir de carbone a une surface spécifique d'environ 10 à environ 1500 m² par gramme de noir de carbone.

11. Structure selon l'une quelconque des revendications 7 - 10 dans laquelle la matière plastique est du polystyrène.

12. Structure selon l'une quelconque des revendications 7 à 11 dont les couches extérieures sont des secondes couches.
